# EUROPEAN PATENT APPLICATION

(11) **EP 4 818 510 A1**
(43) Date of publication of application: **07.10.2026**
(21) Application number: 25167352.1
(22) Date of filing: 31.03.2025
(51) Int. Cl.: F02K 9/64, F02K 9/66, F02K 9/97, F23R 7/00

(54) **ROCKET ENGINE WITH DETONATION COMBUSTION CHAMBER**

(71) Applicant: SIEC BADAWCZA LUKASIEWICZ-INSTYTUT LOTNICTWA, 02-256 Warszawa (PL)
(72) Inventor: KAWALEC, Michal, 02-679 Warszawa (PL)
(74) Representative: Jedrzejewski, Michal

(57) **Abstract**

A rocket engine with a detonation combustion chamber operating in a rotating detonation mode, in which the detonation combustion chamber (1) has a shape bounded by hemispherical walls (2), and is additionally equipped with an injection system in the form of an multihole,impinging injector (3), consisting of a number of small injection holes located opposite each other on the walls (2) of the combustion chamber (1) and adapted to feed liquid, vaporised or partially vaporised propellants into the combustion chamber, and at the end of the combustion chamber there is a central convergent-divergent nozzle (4) geometrically adapted to the spherical shape of the combustion chamber.

## Description

The invention relates to a rocket engine with a detonation combustion chamber, operating in a rotating detonation mode

To date, ring combustion chambers connected to an aerospike nozzle have been primarily used. Aerospike nozzles are expected to significantly improve the performance of rocket engines, but these solutions are not widely used for several reasons. Firstly, there are significant difficulties with cooling the internal element of the nozzle; secondly, the small exhaust gap may deform during engine operation and generate asymmetrical combustion product flow and asymmetrical thrust; thirdly, their use is sensible for fairly large engines, where the critical cross-section is relatively large. This solution dominates worldwide in research work related to Rotating Detonation Engines (RDE).

Patent publication CN117128107A discloses a dual-mode detonation baffle chamber, which consists of an inner shell and an outer shell, a cooling channel is formed between the inner shell and the outer shell, the front area of the inner side of the inner shell forms the combustion chamber of the detonation chamber, and the rear area of the inner side of the inner shell forms the nozzle of the detonation chamber; a ring-shaped inner column is placed on the front ends of the inner shell and the outer shell and passes through the inner shell and the outer shell, an oxidiser nozzle is placed at one end, located on the inner side of the inner shell, the annular inner column, the fuel nozzle is located on the inner side of the inner jacket, and fuel inlets connected to the cooling channel are formed in the tails of the inner jacket and the outer jacket; and the inner jacket and outer jacket, which are located on one side of the combustion chamber, are equipped with a pre-detonation tube for inducing continuous rotational detonation. According to the processing scheme, the thrust adjustment range of the rocket engine thrust chamber has been expanded, the combustion efficiency of the rocket engine thrust chamber under low operating conditions has been improved, and the specific impulse has been improved.

The patent publication CN119436214A discloses a rotary jet combustion chamber with a thermal protection structure comprising: a housing and a combustion chamber enclosed by said housing, said combustion chamber having a combustion section and a nozzle section, said housing is equipped with an oxidiser injection structure and a fuel injection structure connected to said combustion section and a regenerative cooling channel, said regenerative cooling channel is connected to said fuel injection structure, fuel is injected into the combustion chamber through the regenerative cooling channel, and the fuel injection structure is injected into the combustion chamber. the injection structure is injected into the combustion chamber, the aforementioned regenerative cooling channel is located on the outer side of the aforementioned combustion chamber and conducts heat to the aforementioned housing, the fuel flowing through the aforementioned regenerative cooling channel can be preheated by heat exchange with the internal environment of the aforementioned combustion chamber, and the fuel entering the combustion chamber from the fuel injection structure participates in combustion, forming a high-temperature insulation on the inner surface of the combustion chamber wall.

Patent publication EP3267024B1 discloses a rocket engine having a thrust chamber limited by a housing structure with a longitudinal axis of the chamber, wherein the housing structure includes at least one cooling channel hydraulically connected to a coolant source, wherein the cooling channel is intersected by a plurality of bridge elements around which the coolant flows and each of which extends only over a part, in particular a smaller part, of the length measured along the longitudinal axis of the chamber, and which connect two wall elements of the housing, limiting the cooling channel from the inside and from the outside, in particular the smaller part of the length of the cooling channel measured along the longitudinal axis of the chamber, and which connect to each other two wall elements of the housing, limiting the cooling channel from the inside and outside of the housing structure.

The patent publication EP4202200B1 discloses a rocket engine with multi-stage combustion of a propellant mixture, having at least one pre-combustion chamber and a main combustion chamber, a system for supplying the propellant mixture to these chambers, comprising a fuel and oxidiser pump and an exhaust gas nozzle, which, according to the invention, has at least one staged detonation chamber, consisting of at least two preliminary detonation chambers, and at their outlet - an afterburning chamber, in which the detonation products from the pre-chambers are completely mixed and burned, and the exhaust gases are directed outside through a nozzle, preferably of the Aerospike type. In this engine, in the individual staged detonation chamber, the pre-detonation chambers are concentric and have a tubular, ring, disc or conical, and operate in a rotary detonation mode, wherein a gas mixture rich in fuel is supplied to one of the two preliminary detonation chambers in the individual staged detonation chamber, and a gas mixture rich in oxidiser is supplied to the other chamber.

The rocket engine with a detonation combustion chamber, according to the invention, unexpectedly achieves the following advantages over the prior art, among others:
1. thin walls result in a significant reduction in the weight and construction costs of such an engine;
2. it enables the construction of combustion chambers based on modern additive technologies;
3. the use of detonation combustion mode allows for a significant reduction in the dimensions of the combustion chamber and, consequently, a further reduction in engine weight;
4. the use of regenerative cooling will extend the operating time of the rocket engine
5. the central convergent-divergent nozzle enables more optimal performance for small rocket engines compared to typical aerospike nozzles.

A rocket engine with a detonation combustion chamber operating in a rotating detonation mode, according to the invention, is characterised in that the detonation combustion chamber has a shape limited by hemispherical walls, and is additionally equipped with an injection system in the form of an impinging injector, consisting of a plurality of small injection holes arranged opposite each other on the walls of the combustion chamber and adapted to supply liquid, vaporised or partially vaporised propellants to the combustion chamber, and at the end of the combustion chamber there is a central convergent-divergent nozzle, geometrically adapted to the spherical shape of the combustion chamber.

Advantageously, the detonation combustion chamber is equipped with a regenerative cooling system consisting of cooling channels located on the walls of the combustion chamber and/or the diverging wall of the nozzle, wherein liquid propellants are fed to the cooling channels through feed points, wherein the walls of the combustion chamber are thin and made of a highly conductive material, in particular copper alloys.

The subject of the invention is illustrated in the examples of embodiment in the drawings, where Fig. 1 shows a cross-section of the basic version of the engine according to the invention, and Figs. 2 and 3 show cross-sections of the extended version of the engine according to the invention.

List of designations in the figures:
1 - detonation combustion chamber,
2 - combustion chamber walls,
3 - fuel injectors,
4 - convergent-divergent nozzle.
5 - cooling channels serving as evaporators
6,7 - potential locations for liquid propellant feed.

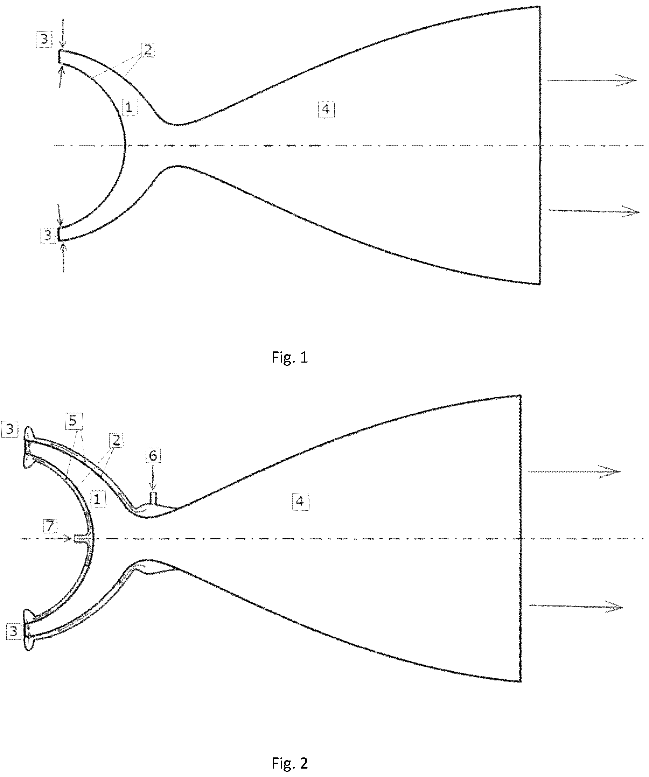

The rocket engine with a detonation combustion chamber shown in Fig. 1, operating in a rotating detonation mode, has a detonation combustion chamber 1, which is limited by hemispherical walls 2, and is additionally equipped with an injection system in the form of an impinging injector 3, consisting of a number of small injection holes located opposite each other on the walls 2 of the combustion chamber 1 and adapted to feed liquid, vaporised or partially vaporised propellants into the combustion chamber, and at the end of the combustion chamber there is a central convergent-divergent nozzle (4) geometrically adapted to the spherical shape of the combustion chamber. The nozzle 4 enables effective processing and ejection of exhaust gases.

In the basic version of the invention (Fig. 1), the engine operates in such a way that fuel (liquid or gaseous) is continuously supplied through the injection holes of the impinging injector 3 (liquid or gaseous) are continuously supplied through the injection holes of the impinging injector 3. The holes are located opposite each other so that the propellants collide with each other and mix more quickly into a detonation mixture that is as homogeneous as possible. Then, immediately after the introduction of the propellants into the chamber, combustion is initiated, and the initiator (not covered by this invention) initiates combustion in the combustion chamber 1 by pyrotechnic, spark or other means. After initiation, detonation waves are formed, which propagate just behind the injectors at very high speed (the detonation speed for a methane/oxygen mixture is approx. 2 km/s), burning the fresh mixture that is still flowing in. The shock wave/waves propagate in a swirling direction, with the axis of rotation being the axis of symmetry of the engine. (As shown by research, the direction of rotation, right or left, is random). The mixture, which is burned over a short distance, reaches a high temperature and high pressure prevails in the chamber. The pressure is discharged in the end part of the hemispherical combustion chamber and in the nozzle 3, which accelerates the hot exhaust gases, giving thrust to the rocket engine. The nozzle dedicated to this solution has a bell or conical shape.

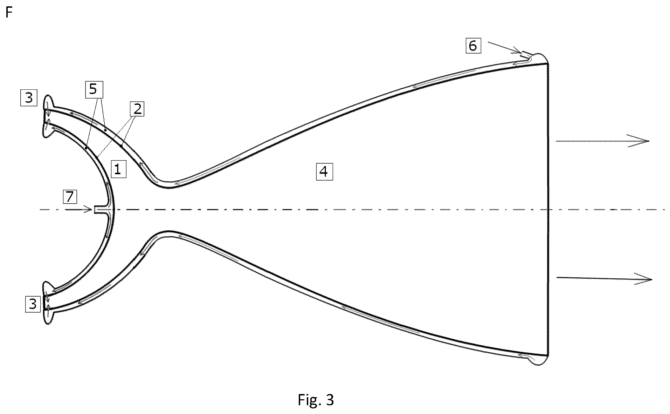

In an extended version of the invention (Figs. 2 and 3), the detonation combustion chamber 1 is equipped with a regenerative cooling system consisting of cooling channels 5 located on the walls of the combustion chamber 2 and/or the diverging wall of the nozzle 4, wherein liquid propellants are fed into the cooling channels 5 through feed points 6, 7, wherein the walls of the combustion chamber 2 are thin and made of a highly conductive material, in particular copper alloys. In the cooling channels, the propellants are heated and even vaporised, and then enter the combustion chamber.

Regenerative cooling consists in supplying liquid propellants to the combustion chamber in such a way that they wash the walls of the combustion chamber, absorbing heat. As a result, the walls of the combustion chamber are cooled and the propellants increase their temperature, which accelerates evaporation already in the combustion chamber. Two propellants are supplied through cooling channels 5 to cool two parts of the rocket engine. In this solution, the propellants are fed at feed points 6 through a feed pipe, through which the propellant (fuel) cools the rear wall of the combustion chamber, and the propellant (oxidiser) is fed through other feed points 7 via a feed pipe and cools the outer wall of the combustion chamber (Fig. 2) and, if necessary, also the nozzle (Fig. 3). The propellants, cooling the chamber, enter the injectors and then the combustion chamber, where they mix and combustion takes place.

## Claims

1. A rocket engine with a detonation combustion chamber operating in a rotating detonation mode, **characterised in that** the detonation combustion chamber (1) has a shape bounded by hemispherical walls (2), and is additionally equipped with an injection system in the form of an impinging injector (3), consisting of a number of small injection holes located opposite each other on the walls (2) of the combustion chamber (1) and adapted to feed liquid, vaporised or partially vaporised propellants into the combustion chamber, and at the end of the combustion chamber there is a central convergent-divergent nozzle (4) geometrically adapted to the spherical shape of the combustion chamber.

2. Engine according to claim 1, **characterised in that** the detonative combustion chamber (1) is equipped with a regenerative cooling system consisting of cooling channels (5) located on the walls of the combustion chamber (2) and/or the diverging wall of the nozzle (4), wherein liquid propellants are supplied to the cooling channels through supply points (6), (7), wherein the walls of the combustion chamber (2) are thin and made of a highly conductive material, in particular copper alloys.
